(19) Europäisches Patentamt
European Patent Office
Office européen des brevets

(11) **EP 2 445 199 A1**

(12) **EUROPEAN PATENT APPLICATION**
published in accordance with Art. 153(4) EPC

(43) Date of publication:
**25.04.2012 Bulletin 2012/17**

(51) Int Cl.:
***H04N 5/335*** *(2011.01)* ***H04N 5/243*** *(2006.01)*

(21) Application number: **10789134.3**

(22) Date of filing: **16.03.2010**

(86) International application number:
**PCT/JP2010/001855**

(87) International publication number:
**WO 2010/146749 (23.12.2010 Gazette 2010/51)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **15.06.2009 JP 2009142092**

(71) Applicant: **Konica Minolta Opto, Inc.**
**Hachioji-shi, Tokyo 192-8505 (JP)**

(72) Inventors:
• **KATAGIRI, Tetsuya**
**Hino-shi**
**Tokyo 191-8511 (JP)**

• **KAMON, Koichi**
**Hino-shi**
**Tokyo**
**1918511 (JP)**

(74) Representative: **HOFFMANN EITLE**
**Patent- und Rechtsanwälte**
**Arabellastraße 4**
**81925 München (DE)**

(54) **IMAGE PICKUP APPARATUS**

(57) An inflection point variation correction unit 641 executes a predetermined characteristic conversion processing on pixel data read by each pixel, so as to unify the photoelectric conversion characteristic of each pixel data into a linear characteristic. When the flexure start level S1 of a target pixel is smaller than an inflection point threshold Sth, and when, at the same time, a pixel value d of the pixel data read by the target pixel is smaller than a predetermined pixel threshold Dth, then an inflection point interpolation unit 642 outputs not the pixel value d' obtained in the above mentioned characteristic conversion processing, but a pixel value d" obtained in an interpolation processing using a pixel data read by a neighbor pixel located near the target pixel, thereby the photoelectric conversion characteristic of the pixel data read by the target pixel is converted into the linear characteristic.

FIG. 2

EP 2 445 199 A1

**Description**

Technical Field

The present invention relates to an image pickup apparatus having an imaging element constituted by a plurality of pixels of which photoelectric conversion characteristic changes at an inflection point,

Background Art

Recently an imaging element constituted by a plurality of pixels of which photoelectric conversion characteristic changes at an inflection point, which is used for expanding the dynamic range, is known. Some of these types of imaging elements have a linear photoelectric conversion characteristic (hereafter called "linear characteristic") on the lower brightness side of the inflection point, and a logarithmic photoelectric conversion characteristic (hereafter called "log characteristic") on the higher brightness side of the inflection point. The photoelectric conversion characteristic that consists of the linear characteristic and the log characteristic is called a "linear log characteristic".

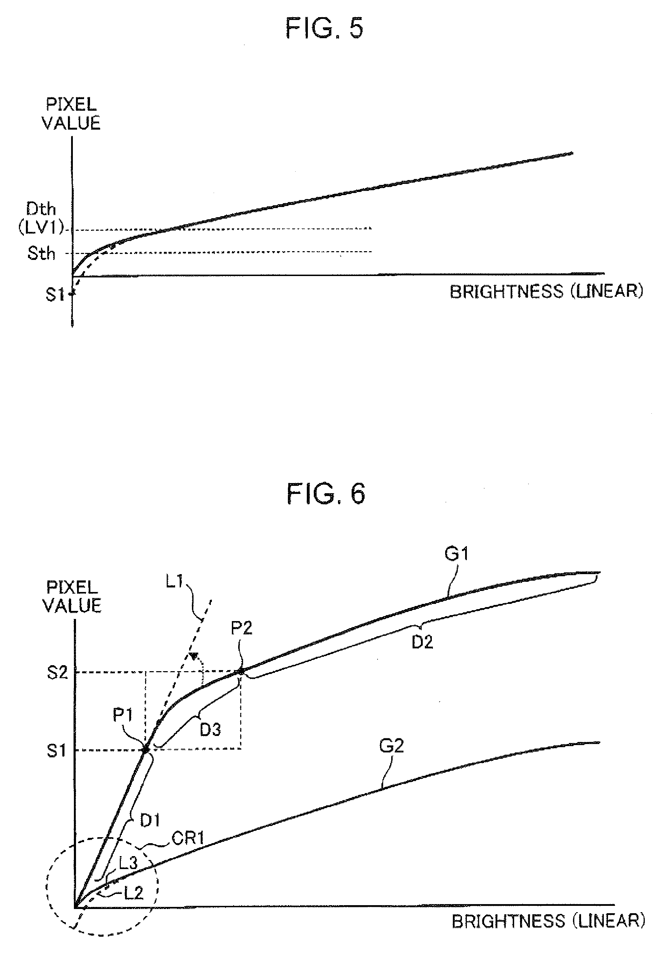

Fig. 6 is a graph depicting the linear log characteristic, where the ordinate indicates a pixel value, and the abscissa indicates brightness in a linear format. In the case of an imaging element having the linear log characteristic, a transit area, where the linear characteristic and the log characteristic coexist (hereafter called "transit area"), exists between an area having the linear characteristic (hereafter called "linear area") and an area having a log characteristic (hereafter called "log area"). In Fig. 6, a photoelectric conversion characteristic of a pixel is indicated by the graph G1, and a photoelectric conversion characteristic of another pixel is indicated by the graph G2,

In the graph G1 in Fig. 6, D1 indicates a linear area, D2 indicates a log area, and D3 indicates a transit area. Then an image processing circuit disposed on the output side of the imaging element performs processing on the pixel data read by the pixels having the linear Jog characteristic, as the preprocessing to perform various image processings, so that the photoelectric conversion characteristic is unified into the linear characteristic or the log characteristic (Patent Document 1).

In the case of unifying the photoelectric conversion characteristic into the linear characteristic, for example, various image processings are performed on the pixel data belonging to the linear area D1 shown in Fig. 6, without changing the values thereof, and various image processings are performed on the pixel data belonging to the log area D2 and the transit area D3, using values converted into the linear characteristic.

In the linear log characteristic, the inflection point P1, which is a start level of the transit area D3, and the inflection point P2, which indicates a start point of the log area D2, normally vary depending on the pixel.

Among pixels, there are pixels in which the inflection point P1 is extremely low, such as a minus value, as the dotted line of the graph G2 in Fig. 6 shows. However actual pixels do not output pixel data having a minus value, therefore the actual photoelectric conversion characteristic of the pixel in which the inflection point P1 is extremely low does not generate the graph indicated by the dotted line L2, but does generate the graph indicated by the solid line L3.

In other words, in the case of a pixel in which the inflection point P1 has a minus value, the pixel value of the photoelectric conversion characteristic is lower than that of the actual photoelectric conversion characteristic in the lower brightness side area indicated by the circle CR1. Then the difference between the dotted line L2 and the solid line L3 increases as the brightness decreases.

However in the case of a conventional image pickup apparatus, the photoelectric conversion characteristic is unified using a lookup table, which is common for all the pixels, without considering the variation of the photoelectric conversion characteristic of each pixel, hence if the pixel data is read by a pixel having the photoelectric conversion characteristic indicated by the graph G2 and the pixel data has a pixel value on the low brightness side indicated by the circle CR1, then a value after unifying the photoelectric conversion characteristic becomes greater than the assumed value, which is a problem.

In other words, the lookup table is designed so that the dotted line L2 is on the straight line L1. The actual photoelectric conversion characteristic, however, is indicated not by the dotted line L2, but by the solid line L2. Therefore if the photoelectric conversion characteristic is converted into the linear characteristic using this lookup table, the value, after the photoelectric conversion characteristic is converted, enters an area above the straight line L1, and the value after conversion becomes a value greater than an expected value. And this causes fixed pattern noise.

Furthermore if a pixel in which the inflection point P1 has a minus value is handled as a defective pixel, and this defective pixel is interpolated by performing a predetermined image processing on this defective pixel, then the fixed pattern noise is suppressed, but the resolution drops, which is a problem.

Patent Document 1: Japanese Patent Application Laid-Open No. 2007-251898

## Summary of the Invention

It is an object of the present invention to provide an image pickup apparatus which can suppress the generation of fixed pattern noise and a drop in resolution.

An aspect of the present invention is a solid-state image pickup apparatus, comprising: an imaging element having a plurality of pixels of which photoelectric conversion characteristic changes at an inflection point; and a characteristic conversion unit which converts a photoelectric conversion characteristic of each pixel data into a predetermined reference photoelectric conversion characteristic by executing a predetermined characteristic conversion processing on pixel data read by each pixel, wherein when a pixel value of an inflection point of a target pixel, which is one of the plurality of pixels, is smaller than a predetermined inflection point threshold, and when, at the same time, a pixel value of pixel data read by the target pixel is smaller than a predetermined pixel threshold, then the characteristic conversion unit performs interpolation processing using pixel data read by neighbor pixels located near the target pixel, in place of the characteristic conversion processing, so as to convert the photoelectric conversion characteristic of the pixel data read by the target pixel into the reference photoelectric conversion characteristic; and when the pixel value of the inflection point of the target pixel is the predetermined inflection point threshold or more, or when the pixel value of the pixel data read by the target pixel is the predetermined pixel threshold or more, then the characteristic conversion unit outputs without modification the pixel value of the target pixel on which the characteristic conversion processing has been executed, so as to convert the photoelectric conversion characteristic of the pixel data read by the target pixel into the reference photoelectric conversion characteristic.

## Brief Description of the Drawings

[Fig. 1] Fig. 1 is a block diagram depicting an image pickup apparatus according to Embodiment 1 of the present invention.
[Fig. 2] Fig. 2 is a block diagram depicting a detailed configuration of the image processing unit shown in Fig, 1.
[Fig. 3] Fig. 3 is a schematic diagram depicting an example of a data structure of a lookup table T1.
[Fig. 4] Fig. 4 is a schematic diagram depicting an example of a data structure of a lookup table T2.
[Fig. 5] Fig. 5 is a graph depicting a linear log characteristic of a pixel in which the inflection point is extremely low.
[Fig. 6] Fig. 6 is a graph depicting a linear log characteristic.

## Best Mode for Carrying Out the Invention

(Embodiment 1)

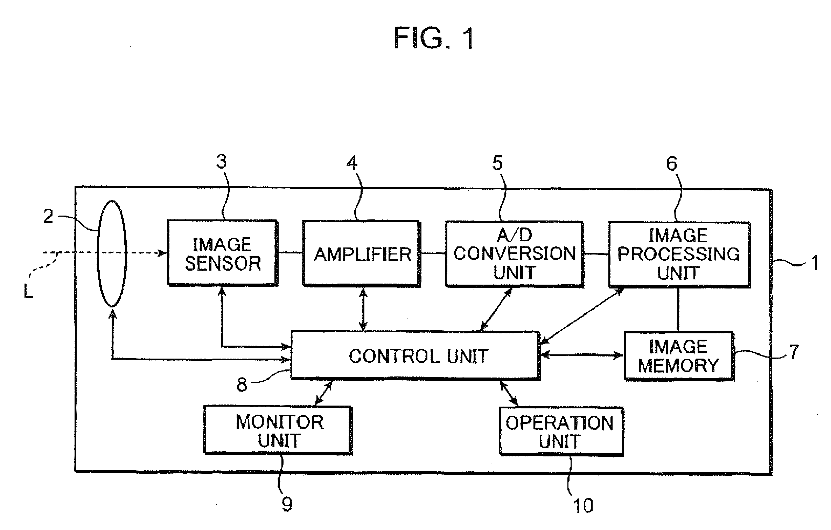

Fig, 1 is a block diagram depicting an image pickup apparatus according to Embodiment 1 of the present invention. As Fig. 1 shows, the image pickup apparatus is constituted by a digital camera, comprising a lens unit 2, an image sensor 3 (an example of an imaging element), an amplifier 4, an A/D conversion unit 5, an image processing unit 6, an image memory 7, a control unit 8, a monitor unit 9 and an operation unit 10.

The lens unit 2 is constituted by an optical lens system which receives an optical image of an object, and guides the image to the image sensor 3. For the optical lens system, a zoom lens, a focus lens, and other fixed lens blocks, for example, which are disposed in series along the optical axis L of the optical image of the object, can be used. The lens unit 2 includes a diaphragm (not illustrated) for adjusting the transmitted light quantity, and a shutter (not illustrated), and driving of the diaphragm and shutter is controlled by the control unit 8.

The image sensor 3 has a plurality of pixels which are arranged in a matrix of a predetermined number of rows x a predetermined number of columns, and of which photoelectric conversion characteristic changes at an inflection point, performs photoelectric conversion on the optical image formed by the lens unit 2, generates image data constituted by pixel values of each R (red), G (green) and B (blue) color component having a level according to the light quantity, and outputs the image data to the amplifier 4.

For the image sensor 3, a CMOS image sensor, a threshold VMIS (Voltage Modulation Image Sensor) or a CCD image sensor, for example, may be used. In the present embodiment, an image sensor on which pixels of each color component are arranged in an RGB Bayer array, for example, is used for the image sensor 3. In other words, the image sensor 3 is an image sensor on which a plurality of types of pixels, for reading pixel data on different color components, are cyclically arrayed in a predetermined pattern.

This is only an example, and an image sensor 3 for picking up a monochrome image may be used instead. In the present embodiment, it is assumed that the array direction of the pixels in each row is the horizontal direction, and the array direction of the pixels in each column is the vertical direction. The image sensor 3 sequentially outputs the pixel data read by each pixel in the manner of a raster scan from the pixel in the upper left corner to the pixel in the lower right corner.

According to the present invention, each pixel has the first photoelectric conversion characteristic on the lower brightness side, the second photoelectric conversion characteristic on the higher brightness side than the first photoelectric conversion characteristic, and the third photoelectric conversion characteristic which is a transit characteristic between the first and second photoelectric conversion characteristics.

As Fig. 6 shows, the linear characteristic can be used for the first photoelectric conversion characteristic, the log characteristic can be used for the second photoelectric conversion characteristic, and the transit characteristic, where the linear characteristic and the log characteristic coexist, can be used for the third photoelectric conversion characteristic.

As Fig. 6 shows, the inflection point between the linear characteristic and the transit characteristic is indicated by the reference symbol P1, and the inflection point between the transit characteristic and the log characteristic is indicated by the reference symbol P2. The flexure start level S1 denotes the pixel value of the inflection point P1, and the flexure start level S2 denotes the pixel value of the inflection point P2.

The amplifier 4 includes an AGC (Auto Gain Control) circuit and a CDS (Correlated Double Sampling) circuit, for example, and amplifies the image data that is output from the image sensor 3. The A/D conversion unit 5 converts the image data of each R, G and B color amplified by the amplifier 4 into digital image data of each R, G and B color. According to the present embodiment, the pixel data received by each pixel of the image sensor 3 is converted into image data having 12-bit gradation values.

The image processing unit 6 executes the later mentioned image processing. The image memory 7 is constituted by a RAM (Random Access Memory), and stores image data processed by the image processing unit 6.

The control unit 8 is constituted by a ROM for storing various control programs, a RAM for temporarily storing data, a central processing unit (CPU) which reads the control programs from ROM and executes them, for example, and controls operation of the entire image pickup apparatus.

For the monitor unit 9, a color liquid crystal display is installed on the rear face of the housing of the image pickup apparatus, for example, and displays an image picked up by the image sensor 3 or an image stored in the image memory 7, on the monitor.

The operation unit 10 includes various operation switches, such as a power switch, a release switch, a mode setting switch for setting various imaging modes, and a menu selection switch. If the release switch is pressed, a series of imaging operations are executed. In other words, an object is imaged by the image sensor 3, a predetermined image processing is performed on the image data obtained by this imaging operation, and the image data is recorded in the image memory 7. Instead of storing the image data in the image memory 7, the series of imaging operations may be ended with outputting the image data from the image processing unit 6 as digital signals, or converting the digital signals into analog signals and outputting the image data as such analog signals as NTSC.

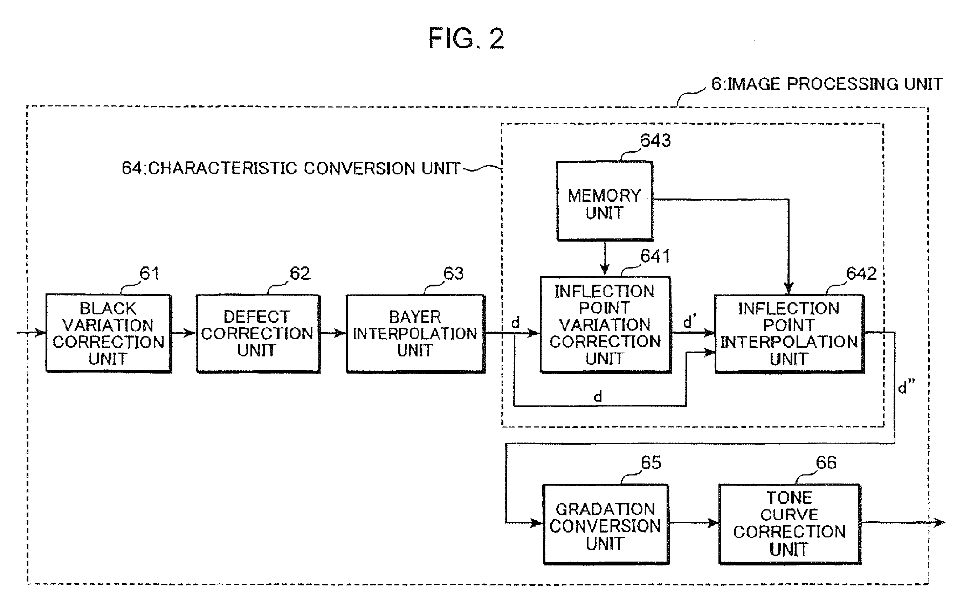

Fig. 2 is a block diagram depicting a detailed configuration of the image processing unit 6 shown in Fig. 1. The image processing unit 6 has a black variation correction unit 61, a defect correction unit 62, a Bayer interpolation unit 63, a characteristic conversion unit 64, a gradation conversion unit 65 and a tone curve correction unit 66.

The black variation correction unit 61 corrects the variations of the black level of each pixel constituting the image sensor 3. The defect correction unit 62 performs interpolation processing, that is, interpolating pixel data read by a defective pixel which can output only a pixel value not greater than a predetermined reference value, using the pixel values of peripheral pixels. Here linear interpolation or spline interpolation can be used for the interpolation processing.

The Bayer interpolation unit 63 executes Bayer interpolation, which is an interpolation processing for interpolating the omitted pixels in each color component, which are generated because each pixel constituting the image sensor 3 is arranged in a Bayer array. Because of this interpolation, image data on one image is represented by three image datum corresponding to three color components: R, G and B. If the image sensor 3 is a monochrome image sensor, the Bayer interpolation unit 63 is unnecessary.

The characteristic conversion unit 64 has an inflection point variation correction unit 641, an inflection point interpolation unit 642 and a memory unit 643, and converts the photoelectric conversion characteristic of each pixel data into a predetermined reference photoelectric conversion characteristic. Since three image datum corresponding to the color components R, G and B are output from the Bayer interpolation unit 63, the characteristic conversion unit 64 executes the following processing for each of the three image datum corresponding to each color component.

In the present embodiment, the characteristic conversion unit 64 uses the linear characteristic as the reference photoelectric conversion characteristic, and converts the log characteristic and the transit characteristic into the linear characteristic, so as to unify the photoelectric conversion characteristic.

The inflection point variation correction unit 641 executes a predetermined characteristic conversion processing on the pixel data read by each pixel, so as to unify the photoelectric conversion characteristic of each pixel data into the linear characteristic.

The inflection point variation correction unit 641 compares the pixel value d of the pixel data read by each pixel, with the values of the flexure start levels S1 and S2 which are predetermined for each pixel, whereby it is determined whether the pixel data is the pixel data having the linear characteristic, the pixel data having the transit characteristic, or the pixel data having the log characteristic, and if it is the pixel data having the linear characteristic, the pixel value d is directly output as the pixel value d', and if it is the pixel data having the transit characteristic or the log characteristic, the characteristic conversion processing is executed on the pixel value d, and the obtained pixel value d' is output.

In concrete terms, if the pixel value d of the pixel data, which is output from the Bayer interpolation unit 63 is $d < S1$, the inflection point variation correction unit 641 determines that this pixel data is pixel data having the linear characteristic, if $S1 \leq d < S2$, the inflection point variation correction unit 641 determines that this pixel data is pixel data having the transit characteristic, and if $d \geq S2$, the inflection point variation correction unit 641 determines that this pixel data is pixel data having the log characteristic.

Here the inflection point variation correction unit 641 can convert the pixel data having the transit characteristic into the pixel data having the linear characteristic using a lookup table T1, in which correspondence, in the case of converting a pixel value in the transit area D3 into a pixel value having the linear characteristic, is predetermined.

The inflection point variation correction unit 641 can also convert the pixel data having the log characteristic into the pixel data having the linear characteristic using the lookup table T2, of which correspondence in the case of converting a pixel value in the log area D2 into a pixel value having the linear characteristic is predetermined.

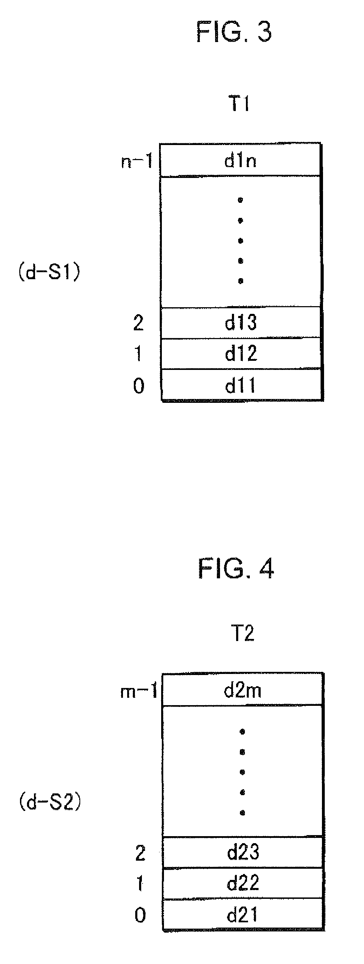

In this case, the lookup tables T1 and T2 are lookup tables commonly used for all pixels. Fig. 3 is a schematic diagram depicting an example of the data structure of the lookup table T1.

As Fig. 3 shows, the lookup table T1 is constituted by n (n is an integer) number of cells to which an address "0" to "n-J" is assigned respectively. Each address corresponds to the relative value of the pixel value d with respect to the flexure start level S1, that is, d-S1. In each cell, a value d11 1o d1n, after converting the value, generated by subtracting the flexure start level S1 from the pixel value d in the transit area D3, into a value having the linear characteristic, is stored.

In other words, a value generated by converting each pixel value d, which belongs to the transit area D3 in Fig. 6, into a value on the straight line L1, is stored in the lookup table T1.

Therefore if the input pixel data is the pixel data having the transit characteristic, the inflection point variation correction unit 641 outputs a value of the lookup table T1 stored in the address d-S1, that is, a value generated by subtracting the flexure start level S1 from the pixel value d of this pixel data, so as to convert the transit characteristic into the linear characteristic.

Here each address of the lookup table T1 corresponds to d-S1, because the variation of the flexure start level S1 of each pixel is considered. In other words, in the present embodiment, the photoelectric conversion characteristic of the transit area D3 of each pixel is based on the assumption that the flexure start level S1 varies, but the waveform is approximately the same. Therefore the lookup table T1 can be applied to all the pixels if each address of the lookup table T1 corresponds not to d but to d-S1.

In the inflection point variation correction unit 641, the pixel data constituting one image data is input in a predetermined sequence, therefore the pixel which read the input pixel data can be specified based on this sequence, whereby the flexure start levels S1 and S2, which are predetermined for each pixel, can be specified.

Fig, 4 is a schematic diagram depicting an example of the data structure of the lookup table T2. As Fig. 4 shows, the lookup table T2 is constituted by m (m is an integer) number of cells to which an address "0" to "m-1" is assigned respectively. Each address corresponds to the relative value of the pixel value d with respect to the flexure start level S2, that is, d-S2, In each cell, a value d21 to d2m, after converting the value, generated by subtracting the flexure start level S2 from the pixel value d in the log area D2, into a value having the linear characteristic, is stored.

In other words, a value generated by converting each pixel value d, which belongs to the log area D2 in Fig. 6, into a value on the straight line L1, is stored in the lookup table T2.

Therefore if the input pixel data is the pixel data having the log characteristic, the inflection point variation correction unit 641 outputs a value of the lookup table T2 stored in the address d-S2, that is, a value generated by subtracting the flexure start level S2 from the pixel value d of this pixel data, as the value after conversion, so as to convert the log characteristic into the linear characteristic.

Here each address of the lookup table T2 corresponds to d-S2, because the variation of the flexure start level S2 of each pixel is considered, just like the case of the lookup table T1.

In other words, in the present embodiment, the photoelectric conversion characteristic of the log area D2 of each pixel is based on the assumption that the flexure start level S2 shown in Fig. 6 varies, but the waveform is the same. Therefore the lookup table T2 can be applied to all the pixels if each address of the lookup table T2 corresponds not to d but to d-S2.

Referring back to Fig. 2. if the flexure start level S1 of a target pixel, which is one of a plurality of pixels, is smaller than a predetermined inflection point threshold, and if, at the same time, the pixel value d of the pixel data read by the target pixel, is smaller than a predetermined pixel threshold, then the inflection point interpolation unit 642 outputs the pixel value d" obtained by interpolating the pixel data read by neighbor pixels located near the target pixel, instead of the pixel value d' obtained by the above mentioned characteristic conversion processing, so as to convert the photoelectric conversion characteristic of the pixel data red by the target pixel into the linear characteristic.

If the flexure start level S1 of the target pixel is the inflection point threshold or more, or if the pixel value d of the pixel data read by the target pixel is the predetermined threshold or more, then the inflection point interpolation unit 642 directly outputs the pixel value d', on which characteristic conversion processing was executed by the inflection point variation correction unit 641, as the pixel value d".

In concrete terms, the processing by the inflection point interpolation unit 642 is expressed by the following algorithm, where d (x, y) is a pixel value of the pixel data read by the target pixel, d' (x, y) is a pixel value of the pixel data on which characteristic conversion processing was executed by the inflection point variation correction unit 641, Sth is an inflection point threshold of the target pixel, and Dth is a pixel threshold of the target pixel.

$$\text{if } (S1 < Sth \, \& \, d(x, y) < Dth)$$
$$d''(x, y) = ((d'(x-1, y) + d'(x+1, y) + d'(x, y-1) + d'(x, y+1)) / 4$$
$$\text{else}$$
$$d''(x, y) = d'(x, y)$$

In the above example, the inflection point interpolation unit 642 specifies four pixels adjacent to the target pixel in the horizontal and vertical directions as the neighbor pixels. An average value of these four pixels is output as d".

The infection point interpolation, unit 642 may specify two pixels adjacent to the target pixel in the horizontal direction as neighbor pixels, and output an average value of the two neighbor pixels as d".

In this case, the processing of the inflection point interpolation unit 642 is expressed by the following algorithm.

$$\text{if } (S1 < Sth \, \& \, d(x, y) < Dth)$$
$$d''(x, y) = ((d'(x-1, y) + d'(x+1, y)) / 2$$
$$\text{else}$$
$$d''(x, y) = d'(x, y)$$

In Fig, 2, the Bayer interpolation unit 63 is disposed in a previous stage of the characteristic conversion unit 64, but may be disposed in a subsequent stage of the characteristic conversion unit 64, specifically between the tone conversion unit 65 and the tone curve correction unit 66.

In this case, one image data before executing Bayer interpolation is input to the characteristic conversion unit 64. Therefore the processing of the inflection point interpolation unit 642 is expressed by the following algorithm.

$$\text{if } (S1 < Sth \& d(x, y) < Dth)$$

$$drb''(x, y) = ((drb'(x-2, y) + drb'(x+2, y) + drb'(x, y-2) + drb'(x, y+2))/4$$

$$dg''(x, y) = ((dg'(x-1, y-1) + dg'(x+1, y-1) + dg'(x-1, y+1) + dg'(x+1, y+1))/4$$

$$\text{else}$$

$$drb''(x, y) = drb'(x, y)$$

$$dg''(x, y) = dg'(x, y)$$

Here drb is a pixel value of the pixel data read by the pixel, where a red or blue filter is installed (R pixel or B pixel) in the Bayer array, and dg is a pixel value of the pixel data read by the pixel where a green filter is installed (G pixel).

In this case, the inflection point interpolation unit 642 is a pixel where a filter having a same color as the target pixel is installed, and four pixels located near the target pixel are specified as the neighbor pixels, and an average value of these four neighbor pixels is output as d".

Specifically, if the target pixel is an R pixel, two R pixels located near this R pixel in the horizontal direction, and two R pixels located near this R pixel in the vertical direction are specified as the neighbor pixels. If the target pixel is a B pixel, the neighbor pixels are specified in the same manner as the case of the R pixel.

If the target pixel is a G pixel, four G pixels adjacent to this G pixel in the upper right, lower right, upper left and lower left directions are specified as neighbor pixels.

Specifying four neighbor pixels is one example, and two pixels, which have a same color filter as the target pixel, and are adjacent to the target pixel in the horizontal direction, may be specified as neighbor pixels.

The memory unit 643 is constituted by a nonvolatile recording media, such as EEPROM, and stores a flexure start level S1 and a flexure start level S2, which are predetermined for each pixel. The memory unit 643 stores the inflection point threshold Sth, the pixel threshold Dth, and the lookup tables T1 and T2. Here the inflection start levels S1 and S2 are values unique to each pixel, and the inflection point threshold Sth and the pixel threshold Dth are values common to all the pixels.

Fig. 5 is a graph depicting a photoelectric conversion characteristic of a pixel in which the inflection point is extremely low, and the ordinate indicates a pixel value, and the abscissa indicates brightness. In the photoelectric conversion characteristic shown in Fig. 5, the inflection point P1 is extremely low, and the flexure start level S1 has a minus value,

Since a pixel cannot output a minus pixel value, the actual photoelectric conversion characteristic (solid line) of a pixel, in which the inflection point is extremely low, is shifted upward from the expected photoelectric conversion characteristic (dotted line) in the low brightness side.

For the inflection point threshold Sth, a value of which flexure start point S1 is at least higher than the flexure start level S1 exhibiting the highest flexure start level is used, among the pixels having a minus value in the flexure start level S1, for example, as shown in Fig. 5.

For the pixel threshold Dth, a value of which the shift start level LV1 is close to the start level LV1 of the pixel of which the shift start level LV1 is highest, is used, among the pixels having a minus value in the flexure start level S1, for example, as shown in Fig. 5.

Referring back to Fig. 2, the gradation conversion unit 65 performs histogram equalization processing and dynamic range compression processing among others on the pixel data which is output from the characteristic conversion unit 64. The histogram equalization processing is a processing for uniformly distributing the gray levels in an image. By this processing, contrast of an image becomes clearer. For the dynamic range compression processing, a technology disclosed in Masami Ogata, "Dynamic Range Compression Technology of Image," Image Laboratory (Japan Industrial Publishing Co. Ltd.) (June 2004), for example, can be used,

The tone curve correction unit 66 performs gamma correction on the image data which is output from the gradation conversion unit 65. The image data which is output from the tone curve correction unit 66 is stored in the image memory 7 shown in Fig. 1.

Now operation of the image pickup apparatus according to the present embodiment will be described- When the operation unit 10 receives an imaging instruction from the user, the image data picked up by the image sensor 3 is amplified to a predetermined level by the amplifier 4, is A/D-converted by the A/D conversion unit 5, and is then input to the image processing unit 6.

On the image data which is input to the image processing unit 6, the black level is corrected by the black variation correction unit 61, defective pixels are interpolated by the defect correction unit 62, Bayer interpolation is performed by the Bayer interpolation unit 63, and then resultant pixel data is input to the inflection point variation correction unit 641.

For the pixel data which is input to the infection point variation correction unit 641, the photoelectric conversion characteristic is converted into the linear characteristic, and the resultant pixel data is input to the inflection point interpolation unit 642.

If a pixel value d of a target pixel, which is the pixel data output from the Bayer interpolation unit 63, and the flexure start level S1 of the target pixel, satisfy both conditions of the flexure start level S1 < inflection point threshold St1, and pixel value d < pixel threshold Dth, then the inflection point interpolation unit 642 executes the above mentioned interpolation processing using the pixel value d' of the neighbor pixels, which is output from the inflection point variation correction unit 641, calculates the pixel value d", and outputs the pixel value d" to the gradation conversion unit 65.

If a pixel value d of a target pixel, which is the pixel data output from the Bayer interpolation unit 63, and the flexure start level S1 of the target pixel, satisfy the condition of the flexure start level S1 ≥ inflection point threshold Sth, or pixel value d ≥ pixel threshold Dth, then the inflection point interpolation unit 642 directly outputs the pixel value d' of the target pixel, which is output from the inflection point variation correction unit 641, to the gradation conversion unit 65 as the pixel value d".

On the pixel data processed by the inflection point interpolation unit 642, histogram equalization processing and dynamic range compression processing among others are preformed by the gradation conversion unit 65, and gamma correction is performed by the tone curve correction unit 66, and the resultant is stored in the image memory 7.

According to the image pickup apparatus, of the present embodiment, if the flexure start level S1 of the target pixel is smaller than the inflection point threshold Sth, and if, at the same time, the pixel value d of the pixel data read by the target pixel is smaller than the pixel threshold Dth, then the pixel data read by the target pixel is converted into the linear characteristic by the interpolation processing using the pixel value d' of the neighbor pixel, on which the characteristic conversion processing was performed by the infection point variation correction unit 641.

Thereby if a pixel data is read by a pixel in which the pixel value of the inflection point is extremely low, and the pixel data, at the same time, has a small pixel value, which belongs to an area where the actual photoelectric conversion characteristic and the expected characteristic conversion characteristic are shifted, then the interpolation processing is executed using the pixel data read by the neighbor pixels, instead of the photoelectric conversion processing being executed.

Since there are not many pixels in which the pixel value of the inflection point is extremely low, it is rare that the pixel value of the inflection point of a neighbor pixel becomes extremely low. Therefore if the pixel data read by the target pixel is interpolated using the pixel data read by the neighbor pixels, the pixel data read by the target pixel being converted to a value greater than an expected value can be prevented, and the generation of fixed pattern noise can be suppressed.

On the other hand, even if the pixel data is read by a pixel in which the pixel value of the inflection point is extremely low, the pixel data is converted into the pixel data having a linear characteristic, not by the interpolation processing but by the characteristic conversion processing, if the pixel value is great. In other words, in the case of the photoelectric conversion characteristic of a pixel in which the pixel value of the inflection point is extremely low, the actual photoelectric conversion characteristic and the expected photoelectric conversion characteristic are not shifted in the area where the pixel value is large, hence the value after conversion is not shifted from the linear characteristic, even if the characteristic conversion processing is executed on the pixel data in this area. Therefore, compared with the case of handling a pixel in which the pixel value of the inflection point is extremely low as a defective pixel, and executing interpolation processing without discrimination regardless the pixel value, a drop in resolution can be prevented.

(Embodiment 2)

An image pickup apparatus according to Embodiment 2 of the present invention will now be described. The image pickup apparatus of the present embodiment is **characterized in that** the interpolation processing is performed using pixels suitable for the interpolation processing, out of the neighbor pixels in Embodiment 1.

In the present embodiment, description on composing elements the same as Embodiment 1 is omitted. The configuration, which is the same as Embodiment 1, will be described with reference to Fig, 1 and Fig. 2.

According to the present embodiment, the inflection point interpolation unit 642 shown in Fig. 2 does not use the pixel data read by a neighbor pixel in which the pixel value is smaller than a pixel threshold Dth, and the flexure start level S1 is smaller than the inflection point threshold Sth, for the interpolation processing.

In concrete terms, the inflection point interpolation unit 642 performs the following processing. The following processing shows an algorithm in the case when two pixels adjacent to the target pixel in the horizontal direction arc

the neighbor pixels.

```
1 :   if (S1 (x, y) < Sth & d (x, y) < Dth) {
2 :    if (S1 (x-1, y) ≧ Sth & d (x-1, y) ≧ Dth {
3 :     if (S1 (x+1, y) ≧ Sth & d (x+1, y) ≧ Dth
4 :      d″ (x, y) = (d′ (x-1, y) + d′ (x+1, y
)) / 2
5 :     else
6 :      d″ (x, y) = d′ (x-1, y)
7 : } else {
8 :    if (S (x+1, y) ≧ Sth & d (x+1, y) ≧ Dth)
9 :    d″ (x, y) = d′ (x+1, y)
10 :  }
11 :} else
12 :     d″ (x, y) = d′ (x, y)
```

The first line of the algorithm shows that the flexure start level S1 of the target pixel is smaller than the inflection point threshold Sth, and at the same time, the pixel value d is smaller than the pixel threshold Dth.

The second line of the algorithm shows that the flexure start level S1 of the neighbor pixel on the left side is the inflection point threshold Sth or more, and at the same time, the pixel value d is the pixel threshold Dth or more.

The third line of the algorithm shows that the flexure start level S1 of the neighbor pixel on the right side is the inflection point threshold Sth or more, and at the same time, the pixel value d is the pixel threshold Dth or more.

The fourth line of the algorithm shows that if all the conditions in the first to third lines of the algorithm are satisfied, interpolation processing is performed using the pixel data of the neighbor pixel on the right side and the neighbor pixel on the left side on which the characteristic conversion processing was performed by the inflection point variation correction unit 641.

The sixth line of the algorithm shows that if the flexure start level S1 is the inflection point threshold Sth or more, and if, at the same time, the pixel value d is the pixel threshold Dth or morse only in the neighbor pixel on the left side, the interpolation processing is performed using only the pixel data of the neighbor pixel on the left side on which the characteristic conversion processing was performed by the inflection point variation correction unit 641.

The eighth line of the algorithm shows that if the flexure start level S1 is the infection point threshold Sth or more, and if, at the same time, the pixel value d is the pixel threshold Dth or more only in the neighbor pixel on the right side, the interpolation processing is performed using only the pixel data of the neighbour pixel on the right side on which the characteristic conversion processing was performed by the inflection point variation correction unit 641.

The twelfth line of the algorithm shows that if the condition in the first line of the algorithm is not satisfied, in other words, if the flexure start level S1 of the target pixel is the inflection point threshold Sth or more, or if the pixel value d of the target pixel is the pixel threshold Dth or morse, the pixel data of the target pixel on which the characteristic conversion processing was performed by the inflection point variation correction unit 641 is directly output.

In the above description, two pixels adjacent to the target pixel in the horizontal direction are specified as the neighbor pixels, but the present invention is not limited to this, and may be applied to the case of specifying two pixels adjacent to the target pixel in the horizontal direction, and two pixels adjacent to the target pixel in the vertical direction, a total of four pixels, as the neighbor pixels.

In this case, the inflection point interpolation unit 642 performs the interpolation processing using pixel data, other than the pixel data read by pixels, out of the four neighbor pixels, in which the flexure start level S1 is smaller than the inflection point threshold Sth, and at the same time, the pixel value d is smaller than the pixel threshold Dth.

If the flexure start level S1 of the neighbor pixel on the left side of the target pixel is smaller than the inflection point threshold Sth, or if the pixel value d is smaller than the pixel threshold Dth, it may be determined whether the flexure start level S1 of the pixel on the left side is the inflection point threshold Sth or more, and at the same time, the pixel value d is the pixel threshold Dth or more, so that the interpolation processing is performed using this pixel as the neighbor pixel if this condition is satisfied.

If the flexure start level S1 of the neighbor pixel on the left side of the target pixel is smaller than the inflection point threshold Sth, or if the pixel value d is smaller than the pixel threshold Dth, a pixel with which the flexure start level S1 becomes the inflection point threshold Sth or more, and, at the same time, the pixel value d becomes the pixel threshold Dth or more, may be sequentially searched toward the left, so that if, a pixel which satisfies this condition exists in a search in a predetermined number of pixels, this pixel is used as the neighbor pixel. For the pixel on the right, the pixel above, the pixel below, the pixel on the upper left, the pixel on the upper right, the pixel on the lower left, and the pixel on the lower right as well, the neighbor pixel can be searched in a same manner as the pixel on the left.

As described above, according to the image pickup apparatus of the present embodiment, if the target pixel is a pixel in which the pixel value of the inflection point P1 is extremely low, and if the interpolation processing is performed on the pixel data read by this target pixel, the neighbor pixel in which the pixel value of the inflection point is extremely low is not used for interpolation, therefore the interpolation processing can be performed accurately,

In Embodiment 1 and Embodiment 2, the inflection point interpolation unit 642 determines whether the interpolation processing is performed using the flexure start level S1, but the present invention is not limited to this, and whether the interpolation processing is performed or not may be determined using the flexure start level S2.

In this case, for the inflection point threshold Sth, a value at which flexure start level S2 is at least higher than the flexure start level S2 exhibiting the highest flexure start level can be used, among the pixels having a minus value in the flexure start level S1, for example, as shown in Fig. 4.

In Embodiment 1 and Embodiment 2, the characteristic conversion unit 64 converts the log characteristic and the transit characteristic into the linear characteristic, but the present invention is not limited to this, and the linear characteristic and the transit characteristic may be converted into the log characteristic.

The technical characteristic of the image pickup apparatus can be summarized as follows.

(1) The solid-state image pickup apparatus according to an aspect of the present invention comprises an imaging element having a plurality of pixels of which photoelectric conversion characteristic changes at an inflection point; and a characteristic conversion unit which converts a photoelectric conversion characteristic of each pixel data into a predetermined reference photoelectric conversion characteristic by executing a predetermined characteristic conversion processing on pixel data read by each pixel, wherein when a pixel value of an inflection point of a target pixel, which is one of the plurality of pixels, is smaller than a predetermined inflection point threshold, and when, at the same time, a pixel value of pixel data read by the target pixel is smaller than a predetermined pixel threshold, then the characteristic conversion unit performs interpolation processing using pixel data read by neighbor pixels located near the target pixel, in place of the characteristic conversion processing, so as to convert the photoelectric conversion characteristic of the pixel data read by the target pixel into the reference photoelectric conversion characteristic; and when the pixel value of the inflection point of the target pixel is the predetermined inflection point threshold or more, or when the pixel value of the pixel data read by the target pixel is the predetermined pixel threshold or more, then the characteristic conversion unit outputs without modification the pixel value of the target pixel on which the characteristic conversion processing has been executed, so as to convert the photoelectric conversion characteristic of the pixel data read by the target pixel into the reference photoelectric conversion characteristic,

According to this configuration, if the inflection point of a target pixel is smaller than the inflection point threshold, and if, at the same time, the pixel data read by the target pixel is smaller than the pixel threshold, then the pixel data read by the target pixel is converted into the reference photoelectric conversion characteristic by the interpolation processing using the pixel data read by the neighbor pixel.

Thereby if a pixel data is read by a pixel in which a pixel value of the inflection point is extremely low, and if, at the same time, the pixel data has a small pixel value which belongs to an area where an actual photoelectric characteristic and the expected photoelectric conversion characteristic are shifted, then the interpolation processing is executed using the pixel data read by the neighbor pixels, instead of the characteristic conversion processing being executed.

Since there are not many pixels in which the pixel value of the inflection point is extremely low, it is rare that the pixel value of the inflection point of a neighbor pixel becomes extremely low. Therefore if the pixel data read by the target pixel is interpolated by the pixel data read by the neighbor pixels, a state of the pixel value read by the target pixel being converted to a value greater than the expected value is prevented, and the generation of fixed pattern noise can be suppressed.

On the other hand, in the case of the photoelectric conversion characteristic of a pixel in which the pixel value of the inflection point is extremely low, the actual photoelectric conversion characteristic and the expected photoelectric conversion characteristic are not shifted in the area where the pixel value is large, hence the value after conversion is not shifted from the reference photoelectric conversion characteristic, even if the characteristic conversion processing is executed on the pixel data in this area.

Therefore in this configuration, even if the pixel data is read by a pixel in which the pixel value of the inflection point is the inflection point threshold or less, the photoelectric conversion characteristic of this pixel data is converted into the reference photoelectric conversion characteristic not by the interpolation processing, but by the characteristic conversion processing if the pixel value is the pixel threshold or more.

If the inflection point of the target pixel is the inflection point threshold or more, the photoelectric conversion characteristics do not shift at all, hence the photoelectric conversion characteristic of the pixel data read by the target pixel is converted by the characteristic conversion processing,

Therefore, compared with the case of handling a pixel in which the pixel value of the inflection point is extremely low as a defective pixel, and executing interpolation processing without discrimination regardless the pixel value, a drop in resolution can be suppressed.

(2) It is preferable that the characteristic conversion unit converts the pixel data read by the neighbor pixel into the reference photoelectric conversion characteristic by using the characteristic conversion processing, and executes the interpolation processing on the pixel data read by the target pixel, by using the pixel data of the neighbor pixel after the conversion.

According to this configuration, interpolation processing is performed using the pixel data after the photoelectric conversion characteristic is converted into the reference photoelectric conversion characteristic.

(3) It is preferable that each of the pixels has a first photoelectric conversion characteristic, a second photoelectric conversion characteristic which is different from the first photoelectric conversion characteristic, and a third photoelectric conversion characteristic which exhibits a transit characteristic between the first and second photoelectric conversion characteristics, and the inflection point is an inflection point between the first photoelectric conversion characteristic and the third photoelectric conversion characteristic, or an inflection point between the third photoelectric conversion characteristic and the second photoelectric conversion characteristic.

According to this configuration, if each pixel has the first to third photoelectric conversion characteristics, the comparison processing with the inflection point threshold is executed using the inflection point between the first and second photoelectric conversion characteristics, or the inflection point between the second and third photoelectric conversion characteristics.

(4) It is preferable that the first photoelectric conversion characteristic is a linear characteristic, the second photoelectric conversion characteristic is a logarithmic characteristic, and the reference photoelectric conversion characteristic is the linear characteristic.

According to this configuration, the generation of the fixed pattern noise and the drop in resolution can be suppressed when the logarithmic characteristic and the transit characteristic are converted into the linear characteristic, so as to unify the photoelectric conversion characteristic.

(5) It is preferable that the characteristic conversion unit does not use the pixel data read by a pixel, among the neighbor pixels, of which pixel value is smaller than the pixel threshold and in which the pixel value of the inflection point is smaller than the inflection point threshold, for the interpolation processing.

According to this configuration, in the case when a pixel in which the pixel value of the inflection point is extremely low is specified as a target pixel, and interpolation processing is performed on the pixel data read by the target pixel, a neighbor pixel, having a photoelectric conversion characteristic that is similar to that of the target pixel, is not used for the interpolation processing, hence the interpolation processing can be executed accurately.

(6) It is preferable that the characteristic conversion unit specifies two pixels adjacent to the target pixel in the horizontal direction as the neighbor pixels.

According to this configuration, two pixels adjacent to the target pixel in the horizontal direction, that is, two pixels adjacent to the target pixel on the same row, are specified as the neighbor pixels, so a memory to store pixel data read by pixels on the other rows is unnecessary, and the interpolation processing can be executed without waiting for the pixel data being read by the pixels on the other rows, therefore the configuration of the apparatus is simplified.

(7) It is preferable that the characteristic conversion unit specifies two pixels adjacent to the target pixel in the horizontal direction and two pixels adjacent to the target pixel in the vertical direction as the neighbor pixels.

According to this configuration the interpolation processing is performed using four neighbor pixels, hence the interpolation processing can be executed accurately.

(8) It is preferable that a plurality of types of pixels for reading pixel data having different color components are cyclically arranged with a. predetermined pattern in the imaging element, and the characteristic conversion unit specifies pixels which are the same type as the target pixel and are located near the target pixel, as the neighbor pixels.

According to this configuration, the interpolation processing can be executed using pixels, which read the pixel data having the same color as the target pixel, as the neighbor pixels.

**Claims**

1. An image pickup apparatus comprising:

An imaging element having a plurality of pixels of which photoelectric conversion characteristic changes at an inflection point; and

a characteristic conversion unit which converts a photoelectric conversion characteristic of each pixel data into a predetermined reference photoelectric conversion characteristic by executing a predetermined characteristic conversion processing on pixel data read by each pixel, wherein

when a pixel value of an inflection point of a target pixel, which is one of the plurality of pixels, is smaller than a predetermined inflection point threshold, and when, at the same time, a pixel value of pixel data read by the target pixel is smaller than a predetermined pixel threshold, then the characteristic conversion unit performs interpolation processing using pixel data read by neighbor pixels located near the target pixel, in place of the characteristic conversion processing, so as to convert the photoelectric conversion characteristic of the pixel data read by the target pixel into the reference photoelectric conversion characteristic, and

when the pixel value of the inflection point of the target pixel is the predetermined inflection point threshold or more, or when the pixel value of the pixel data read by the target pixel is the predetermined pixel threshold or more, then the characteristic conversion unit outputs without modification the pixel value of the target pixel on which the characteristic conversion processing has been executed, so as to convert the photoelectric conversion characteristic of the pixel data read by the target pixel into the reference photoelectric conversion characteristic.

2. The image pickup apparatus according to Claim 1, wherein the characteristic conversion unit converts the pixel data read by the neighbor pixel into the reference photoelectric conversion characteristic by using the characteristic conversion processing, and executes the interpolation processing on the pixel data read by the target pixel by using the pixel data of the neighbor pixel after the conversion.

3. The image pickup apparatus according to Claim 1 or 2, wherein
each of the pixels has a first photoelectric conversion characteristic, a second photoelectric conversion characteristic which is different from the first photoelectric conversion characteristic, and a third photoelectric conversion characteristic which exhibits a transit characteristic between the first and second photoelectric conversion characteristics, and
the inflection point is an inflection point between the first photoelectric conversion characteristic and the third photoelectric conversion characteristic, or an inflection point between the third photoelectric conversion characteristic and the second photoelectric conversion characteristic.

4. The image pickup apparatus according to any of Claims 1 to 3, wherein
the first photoelectric conversion characteristic is a linear characteristic, and
the second photoelectric conversion characteristic is a logarithmic characteristic, and
the reference photoelectric conversion characteristic is the linear characteristic.

5. The image pickup apparatus according to any of Claims 1 to 4, wherein
the characteristic conversion unit does not use the pixel data read by a pixel, among the neighbor pixels, of which pixel value is smaller than the pixel threshold and in which the pixel value of the inflection point is smaller than the inflection point threshold, for the interpolation processing.

6. The image pickup apparatus according to any of Claims 1 to 5, wherein
the characteristic conversion unit specifies two pixels adjacent to the target pixel in the horizontal direction as the neighbor pixels.

7. The image pickup apparatus according to any of Claims 1 to 5, wherein the characteristic conversion unit specifies two pixels adjacent to the target pixel in the horizontal direction and two pixels adjacent to the target pixel in the vertical direction as the neighbor pixels.

8. The image pickup apparatus according to any of Claims 1 to 7, wherein
a plurality of types of pixels for reading pixel data having different color components are cyclically arranged with a predetermined pattern in the imaging element, and
the characteristic conversion unit specifies pixels which are the same type as the target pixel and are located near the target pixel, as the neighbor pixels.

# FIG. 1

EP 2 445 199 A1

FIG. 2

6:IMAGE PROCESSING UNIT

64:CHARACTERISTIC CONVERSION UNIT

643

MEMORY
UNIT

61

BLACK
VARIATION
CORRECTION
UNIT

62

DEFECT
CORRECTION
UNIT

63

BAYER
INTERPOLATION
UNIT

d

641

INFLECTION
POINT
VARIATION
CORRECTION
UNIT

d'

642

INFLECTION
POINT
INTERPOLATION
UNIT

d

d"

65

GRADATION
CONVERSION
UNIT

66

TONE
CURVE
CORRECTION
UNIT

EP 2 445 199 A1

# FIG. 3

T1

| | |
|---|---|
| n−1 | d1n |
| | ⋮ |
| 2 | d13 |
| 1 | d12 |
| 0 | d11 |

(d−S1)

# FIG. 4

T2

| | |
|---|---|
| m−1 | d2m |
| | ⋮ |
| 2 | d23 |
| 1 | d22 |
| 0 | d21 |

(d−S2)

# FIG. 5

# FIG. 6

| INTERNATIONAL SEARCH REPORT | International application No. |
|---|---|
| | PCT/JP2010/001855 |

**A. CLASSIFICATION OF SUBJECT MATTER**
*H04N5/335*(2006.01)i, *H04N5/243*(2006.01)i

According to International Patent Classification (IPC) or to both national classification and IPC

**B. FIELDS SEARCHED**

Minimum documentation searched (classification system followed by classification symbols)
H04N5/335, H04N5/243

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 11-298799 A  (Honda Motor Co., Ltd., Citizen Watch Co., Ltd.), 29 October 1999 (29.10.1999), entire text; all drawings & US 6191408 B1 | 1-8 |
| A | JP 2002-077733 A  (Minolta Co., Ltd.), 15 March 2002 (15.03.2002), entire text; all drawings & US 2002/0054389 A1     & EP 1187217 A2 | 1-8 |
| A | JP 2007-151016 A  (Konica Minolta Holdings, Inc.), 14 June 2007 (14.06.2007), entire text; all drawings (Family: none) | 1-8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 April, 2010 (09.04.10) | 20 April, 2010 (20.04.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/001855

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-251898 A (Konica Minolta Holdings, Inc.), 27 September 2007 (27.09.2007), entire text; all drawings & US 2007/0216957 A1 | 1-8 |

Form PCT/ISA/210 (continuation of second sheet) (July 2009)

**EP 2 445 199 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• JP 2007251898 A

### Non-patent literature cited in the description

• Dynamic Range Compression Technology of Image. **Masami Ogata.** Image Laboratory. Japan Industrial Publishing Co. Ltd, June 2004

**19**